# EUROPÄISCHE PATENTANMELDUNG

(11) **EP 0 841 353 A1**
(43) Veröffentlichungstag der Anmeldung: **13.05.1998**
(21) Anmeldenummer: 96203102.7
(22) Anmeldetag: 07.11.1996
(51) Int. Cl.: C08F 230/04, C09D 5/16

(54) **Verfahren zur Herstellung von polymeren Bindemitteln und deren Verwendung für Antifouling-Anstrichsysteme**

(71) Anmelder: Witco GmbH, 59192 Bergkamen (DE)
(72) Erfinder: Schneider, Uwe, Dr., 44319 Dortmund (DE)

(57) **Zusammenfassung**

Die Erfindung betrifft Bindemittel für Antifouling-Anstrichmittel, herstellbar durch Copolymerisation von polymerisierbaren Monomeren, welche dadurch gekennzeichnet sind, daß als polymerisierbare Monomere Mischungen aus
A) mindestens eine der Verbindungen der allgemeinen Formel I 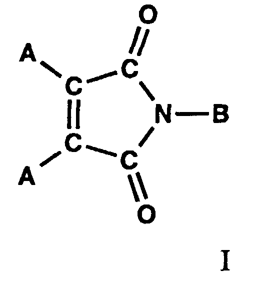 und
B) mindestens eine ethylenisch ungesättigte Verbindung mit der allgemeinen Formel II 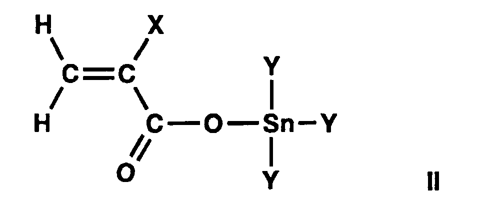 und
C) mindestens eine ethylenisch ungesättigte Verbindung, worin das molare Verhältnis von (A + B) : C zwischen 1 : 0 bis 1 : 10 liegt,
in Gegenwart von radikalbildenden Initiatoren und inerten Lösungsmitteln in an sich bekannter Weise polymerisiert werden.

## Beschreibung

Die vorliegende Erfindung betrifft ein Verfahren zur Herstellung von polymerisierbaren, langsam hydrolysierbaren Verbindungen, die zur Herstellung von Bindemittelsystemen für Antifouling-Farben zum Schutz von Unterwasserflächen gegen den Bewuchs durch Meeresorganismen verwendet werden können.

Oberflächen, die ständig dem Meerwasser ausgesetzt sind, wie z. B. Schiffe, Bojen, Bohrplattformen, Unterwasserpipelines, Fischnetze etc., werden unter geeigneten Bedingungen innerhalb kurzer Zeit durch Meeresorganismen, wie z. B. Algen, Seegras, Muscheln, Röhrenwürmer, Schwämme etc., besiedelt. Dieser Bewuchs wirkt sich in einer Vielzahl von Fällen äußerst störend und für die Gebrauchseigenschatten vieler Einrichtungen einschränkend und hinderlich aus. So führt z. B. eine Besiedlung von Unterwasser-Schiffsflächen zu einer Einschränkung der Manövrierfähigkeit der Schiffe und aufgrund des erhöhten Reibungswiderstandes im Wasser zu einem deutlichen Mehrverbrauch an Treibstoff.

Aus diesen Gründen finden zum Schutz von Unterwasserflächen vor Besiedlung bewuchsverhindernde Anstrichstoffe, sogenannte Antifouling-Farben, einen breiten Einsatz. Diese Anstrichstoffe bestehen meistens aus einem bioziden oder nicht bioziden polymeren und filmbildenden Bindemittel, Co-Bioziden und Pigmenten.

Häufig angewandte Antifouling-Anstriche der letzten Jahre besitzen neben den bewuchsverhindernden auch selbstglättende Filmeigenschaften (sogenannte "self-polishing" Polymere). In diesen Systemen wird der selbstglättende Effekt durch eine gezielte Hydrolyse funktioneller Gruppen erreicht, die die Oberfläche des Anstrichs hydrophil und damit erodierbar werden läßt; derartige Anstriche sind z. B. in EP-A- 0 289 481 beschrieben. Besonders breite Verwendung haben Antifouling-Farben gefunden, deren Copolymere Triorganozinnester, insbesondere Tri-n-butylzinnester, von ungesättigten Carbonsäuren, z. B. (Meth)acrylsäure, enthalten. Beispiele hierfür finden sich in GB-A-1 457 590. Diese Systeme besitzen aufgrund der langsamen Hydrolyse der Triorganozinnester-Gruppe selbstglättende Eigenschaften und gleichzeitig durch die biozide Wirkung der Organozinn-Verbindung hervorragende Antifouling-Eigenschaften. Diese besonders günstige Eigenschaftskombination hat zu einer weiten Verbreitung der zinnbasierten Antifouling-Farben geführt.

In den vergangenen Jahren wurde über den Einsatz der Tributylzinn- und Triphenylzinn-haltigen Anstrichmittel diskutiert, da nicht in allen Bereichen die bislang üblichen Abgaberaten der zinnorganischen Verbindungen ins Meerwasser erforderlich zu sein scheinen. So ist in einigen Ländern die Abgaberate zinnhaltiger Antifouling-Farben auf 4 µg cm⁻² d⁻¹ TBT (Tributylzinn) beschränkt worden, und ein Einsatz darf nur auf Schiffen mit Längen über 25 m erfolgen. Es besteht daher ein Bedarf an wirksamen, langsam hydrolysierbaren Antifouling-Anstrichsystemen mit reduziertem Zinngehalt und dennoch ausreichenden selbstglättenden Eigenschaften.

In der Literatur werden verschiedene Beispiele von zinnhaltigen Antifouling-Farben beschrieben, die neben einem Organozinn-haltigen Monomeren noch weitere verschiedene funktionalisierte Monomere enthalten. So werden in EP 0 342 493 Copolymere aus Tributylzinnmethacrylat, Acrylamid und Acrylsäure aufgeführt. Andere Systeme werden in EP 0 200 433 (Copolymere aus Tributylzinnmethacrylat, Methylmethacrylat, Styrol, Ethylenglykoldimethacrylat und Acrylnitril), AU 466 764 (Copolymere aus Tributylzinnacrylat und Vinylacetat) und DD 279 258 (Copolymere aus Tributylzinnacrylat, Methylmethacrylat und Polyethylenglykolmonoacrylat) beschrieben. Alle diese Systeme haben jedoch entweder keine kommerzielle Verbreitung gefunden oder weisen nicht die besonders günstige Kombination aus bewuchsverhindernden und selbstglättenden Eigenschaften auf.

Aus WO 94/17126, US 4 111 879 und US 5 288 409 ist bekannt, daß Bindemittel, die N-substituierte Maleimide enthalten, bewuchsverhindernde Eigenschaften aufweisen können. Nachteilig bei den beschriebenen Systemen ist jedoch, daß die N-substituierten Maleimide entweder nur physikalisch in ein Bindemittel eingemischt werden und auf diese Weise im Wasser rasch herausgelöst werden können oder in einem stark vernetzten Polymersystem eingebunden sind, was auf der anderen Seite eine kontrollierte Hydrolyse erschwert.

Es wurde nun gefunden, daß Polymere, zusammengesetzt aus einer Kombination aus Organozinn-haltigen (Meth)acrylaten - z.B. Tributylzinnmethacrylat (TBTM) - und N-substituierten Maleimiden besonders günstige Eigenschaftskombinationen für einen Einsatz als Antifouling-Anstrichsystem aufweisen. Dabei kann der Zinngehalt der Polymeren deutlich unter die kommerziell üblichen Werte von ca. 20 Gew.-% (und höher) abgesenkt werden, ohne daß die bewuchsverhindernden und selbstglättenden Eigenschaften verlorengehen. Die durch den geringeren Anteil an Organozinn-haltigen Monomeren reduzierte Hydrolyse wird dabei durch den Gehalt an kontrolliert hydrolysierenden N-substituierten Maleimid-Monomeren, die eine ergänzende bewuchsverhindernde Eigenschaft aufweisen können, kompensiert. Diese Hydrolyse in alkalischem Milieu (Meerwasser-pH: 8.1 - 8.3) ist Voraussetzung einerseits für selbstglättende Eigenschaften und andererseits für einen bewuchsverhindernden Effekt der Anstrichfarbe durch langsame, kontinuierliche Abgabe der hydrolysierten Verbindungen. Ein besonderer Vorteil der vorliegenden Erfindung ist, daß die N-substituierten Maleimid-Monomeren in einem linearen, wenig verzweigten bzw. vernetzten Polymersystem chemisch gebunden sind und die dadurch mögliche langsame Hydrolyse der Organozinn- und Maleimid-Gruppen partiell hydrophile und auf diese Weise lösliche Polymeroberflächen erzeugen kann.

Gegenstand der vorliegenden Erfindung sind demnach Bindemittel für Antifouling-Anstrichmittel, herstellbar durch Copolymerisation von polymerisierbaren Monomeren, welche dadurch gekennzeichnet sind, daß als polymerisierbare Monomere Mischungen aus
A) mindestens eine der Verbindungen der allgemeinen Formel I 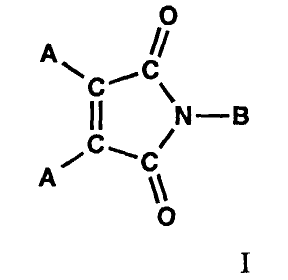 worin bedeuten:
   - A =: H, Cl, Br, F
   - B =: Ph(R¹)ₙ oder Benzyl oder -CH₂-COOR²
   - Ph =: Phenyl
   - R¹ =: gleich oder verschieden -NR²₂, -NH-CO-R², -NH-COOR², -CH₂-COOR², -COOR², -C(O)H, -O-R², -O-CO-R², -SO₃H, Halogen, gegebenenfalls substituierte Thiazolylsulfamylverbindungen der Formel 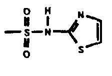 oder gegebenenfalls substituierte Thiadiazolylverbindungen
   - n =: 1 - 3
   - R² =: H, gegebenenfalls substituierte Alkyl-, Aryl-, Cycloalkyl-, Aralkyl-Reste mit 1 - 10 C-Atomen
   und
B) mindestens eine ethylenisch ungesättigte Verbindung mit der allgemeinen Formel II 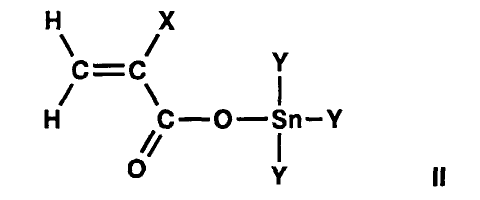 worin bedeuten:
   - X =: H, CH₃
   - Y =: C₄ - C₁₂ Alkyl, Phenyl, Cyclohexyl,
   worin das molare Verhältnis von A : B zwischen 1 : 1 bis 5 : 1 liegt, und
C) mindestens eine ethylenisch ungesättigte Verbindung, worin das molare Verhältnis von (A + B) : C) zwischen 1 : 0 bis 1 : 10 liegt,
in Gegenwart von radikalbildenden Initiatoren und inerten Lösungsmitteln in an sich bekannter Weise polymerisiert werden.

Die gegebenenfalls substituierten Thiadiazolylverbindungen (R¹ in Formel I) können 1,2,4-Thiadiazole, gegebenenfalls in 3-Position substituiert mit Halogen, C₁ - C₄ - Alkyl, Aryl, sein. Die gegebenenfalls substituierten Thiazolylsulfamylverbindungen (R¹ in Formel I) können gegebenenfalls mit Halogen oder C₁ - C₄ - Alkyl in 4- und/oder 5-Position substituiert sein.

Weitere Gegenstände der Erfindung sind durch die Ansprüche gekennzeichnet.

Als Komponente A zur Herstellung von Bindemitteln für Antifouling-Anstriche können beispielsweise
substituierte N-(Phenyl)-maleimide, wie N-(4-Formylphenyl)-maleimid, N-(4-Acetylaminophenyl)-maleimid, N-(4-Phenylessigsäure)-maleimid, N-(Sulfathiazolyl)-maleimid, N-(2-Chlorphenyl)-maleimid, N-(4-Chlorphenyl)-maleimid, N-(4-Bromphenyl)-maleimid, N-(4-Fluorphenyl)-maleimid, N-(2,3-Dichlorphenyl)-maleimid, N-(2,4,6-Trichlorphenyl)-maleimid, N-(2,4,6-Tribromphenyl)-maleimid, N-(4-Methoxyphenyl)-maleimid, N-(4-Hydroxyphenyl)-maleimid, N-(4-Carboxyphenyl)-maleimid, N-(4-Sulfonsäurephenyl)-maleimid, N-(4-Acetoxyphenyl)-maleimid, N-(3-Ethyloxycarbonylphenyl)-maleimid, N-(4-Methyloxycarbonylphenyl)-maleimid, N-(4-Ethyloxycarbonylphenyl)-maleimid, N-[4-(N',N'-Dimethylamino)phenyl]-maleimid;
N-(Glycinyl)-maleimide, wie N-(Glycinyl)-maleimid, N-(Ethylglycinyl)-maleimid;
N-substituierte 2,3-Dichlormaleimide, wie N-(4-Carboxyphenyl)-2,3-dichlormaleimid, N-(4-Chlorphenyl)-2,3-dichlormaleimid, N-(4-Ethyloxycarbonylphenyl)-2,3-dichlormaleimid
verwendet werden.

Bevorzugt eingesetzt werden N-(4-Chlorphenyl)-maleimid, N-(4-Bromphenyl)-maleimid, N-(4-Fluorphenyl)-maleimid, N-(2,4,6-Trichlorphenyl)-maleimid, N-(2,4,6-Tribromphenyl)-maleimid, N-(4-Hydroxyphenyl)-maleimid, N-(4-Carboxyphenyl)-maleimid, N-(4-Acetoxyphenyl)-maleimid, N-(4-Ethyloxycarbonylphenyl)-maleimid, N-(Sulfathiazolyl)-maleimid, N-(Benzyl)-maleimid, N-(Glycinyl)-maleimid, N-(4-Chlorphenyl)-2,3-dichlormaleimid, N-(4-Ethyloxycarbonylphenyl)-2,3-dichlormaleimid, N-[4-(N',N'-Dimethylamino)phenyl]-maleimid.

Als Komponente B zur Herstellung von Bindemitteln für Antifouling-Anstriche können zinnhaltige Monomere wie Tributylzinnmethacrylat, Trioctylzinnmethacrylat, Triphenylzinnmethacrylat, Tricyclohexylmethacrylat, Tributylzinnacrylat, Triphenylzinnacrylat eingesetzt werden. Bevorzugt eingesetzt wird Tributylzinnmethacrylat.

Die erfindungsgemäß mitverwendbaren ethylenisch ungesättigten Verbindungen C sind Monomere wie:
1) Carboxylgruppen enthaltende Verbindungen, wie z. B. Acrylsäure, Methacrylsäure, Maleinsäure, Itaconsäure
2) C₁ - C₁₈-Ester der Acrylsäure bzw. Methacrylsäure, wie z. B. Methylacrylat, Ethylacrylat, Propylacrylat, n-Butylacrylat, n-Hexylacrylat, Methylmethacrylat, Ethylmethacrylat, Propylmethacrylat, i-Propylmethacrylat, n-Butylmethacrylat, n-Hexylmethacrylat oder n-Dodecylmethacrylat; C₂ - C₁₈ Alkoxyester der Acrylsäure bzw. Methacrylsäure, wie z. B. Methoxyethylacrylat, Methoxyethylmethacrylat, Methoxybutylacrylat, Methoxybutylmethacrylat, Ethoxybutylacrylat oder Ethoxybutylmethacrylat; C₂ - C₈ Hydroxyalkylacrylate bzw. Hydroxyalkylmethacrylate, wie z. B. Hydroxyethylacrylat, Hydroxyethylmethacrylat, Hydroxypropylacrylat oder Hydroxypropylmethacrylat; Silicium enthaltende Ester der Acrylsäure bzw. Methacrylsäure, wie z B. (3-Methacryloyloxypropyl)-trimethoxysilan, (3-Methacryloyloxypropyl)-triethoxysilan, Trimethylsilylmethacrylat
3) Vinylverbindungen, wie z. B. Styrol, -Methylstyrol, Vinyltoluol, p-Chlorstyrol, Vinylacetat, 4-Vinylpyridin oder N-Vinylpyrrolidon.

Die Darstellung der Antifouling-Bindemittelsysteme erfolgt durch radikalische oder ionische Copolymerisation der erfindungsgemäßen Monomeren mit den gegebenenfalls mitverwendeten ethylenisch ungesättigten Verbindungen. Als Radikalstarter (Initiatoren) können herkömmliche Peroxid- oder Azogruppen enthaltende Verbindungen, wie Dibenzoylperoxid, Bis-(,-dimethylbenzyl)-peroxid, tert-Butylhydroperoxid, Kaliumperoxodisulfat, 2,2'-Azobisisobutyronitril, 2,2'-Azobis-(2-methylbutyronitril) in Konzentrationen von 0.01 bis 2 Gew.-% der eingesetzten Monomermischung verwendet werden. Die Copolymerisation wird zweckmäßig in geeigneten Lösemitteln als Lösungs- oder Fällungspolymerisation durchgeführt. Hierzu kommen aromatische bzw. aliphatische Kohlenwasserstoffe, wie Toluol, Xylol, Hexan, Heptan, Petroleumbenzin; Ester, wie Ethylacetat, Butylacetat; Ketone, wie Aceton, Methylethylketon, Methylisobutylketon; Ether, wie Ethylenglykoldimethylether, Diethylenglykoldimethylether (Diglyme), Dibutylether, 1,4-Dioxan, Tetrahydrofuran, 1-Methoxy-2-propanol oder Lösemittel wie N,N-Dimethylformamid, Dimethylsulfoxid, N-Methylpyrrolidin-2-on, Wasser oder Butanol, eventuell als Gemisch, in Betracht. Die Monomerkonzentration liegt je nach gewünschter Viskosität zwischen 5 und 80 Gew.-%, bezogen auf die Gesamtlösung. Die Copolymerisation selbst kann mittels bekannter Verfahren, wie z. B. durch Erhitzen der Monomeren zusammen mit den Initiatoren im Lösemittel oder durch Zutropfen der Monomeren in erhitztes Lösemittel, durchgeführt werden. In Abhängigkeit der Zusammensetzung der Monomermischung und der gewählten Copolymerisationsbedingungen werden Copolymere unterschiedlicher Zusammensetzung und mit zahlenmittleren Molekulargewichten von 5000 bis 200000 erhalten.

Die auf diese Weise hergestellten Antifouling-Bindemittel können zur Eigenschaftsverbesserung gegebenenfalls Hilfs- und Zusatzstoffe wie Pigmente, Biozide und Stabilisatoren, wie sie in US 5 332 430 beschrieben sind, enthalten. Als Beispiele für Pigmente seien Titandioxid, Aktivkohle, Eisenoxid sowie Blaupigmente und als Beispiele für Biozide seien Kupferoxid, Kupferthiocyanat, Zinkoxid, Zinkpyrithion, Zink-bis(dimethyl-dithiocarbamat) sowie Verbindungen, die z. B. Benzothiazole, Dithiocarbamate, Triazine, Thiodiazine, Thiadiazole, Isothiazoline, quaternäre Ammoniumsalze enthalten, genannt. Beispiele für weitere Zusatzstoffe sind Füllstoffe wie Siliciumdioxid, Kaolin, Talkum und Hilfsstoffe wie Bentonite, Aerosil und ähnliche Verbindungen.

Die vorliegende Erfindung wird in den folgenden Beispielen näher beschrieben.

### Beispiele

### Beispiel 1

### Allgemeine Synthesevorschrift zur Herstellung von Monomeren

In einem Dreihalskolben wurden 0.8 mol Maleinsäureanhydrid, 450 ml N,N-Dimethylformamid und 0.8 mol der jeweiligen Ausgangsverbindung mit einer primären Amingruppe zusammengegeben und 5 h bei Raumtemperatur gerührt. Das Reaktionsgemisch wurde anschließend in 600 ml kaltes Wasser gegossen. Man filtrierte die ausgefallene Maleaminsäure ab, wusch mit kaltem Wasser nach und trocknete anschließend im Trockenschrank. Die Maleaminsäure wurde mit 300 ml Essigsäureanhydrid und 8.2 g Natriumacetat (wasserfrei) zusammen in einen Dreihalskolben gegeben. Das Gemisch wurde 2 h lang bei 60 °C gerührt. Zur Isolierung des substituierten Maleimids goß man die Lösung langsam in kaltes Wasser, filtrierte das ausgefallene Produkt ab, wusch mit Wasser nach und trocknete im Trockenschrank. Zur Reinigung ließ sich das Rohprodukt aus Methanol : Wasser (6:1) umkristallisieren.

### Beispiel 2

### Allgemeine Synthesevorschrift zur Herstellung von Monomeren

In einem Dreihalskolben wurden 1.0 mol Maleinsäureanhydrid in 50 ml Toluol vorgelegt. Unter Rühren wurden 1.0 mol der jeweiligen Ausgangsverbindung mit einer primären Amingruppe in 150 ml Toluol langsam zugetropft, 30 min bei Raumtemperatur gerührt und dann noch 30 min unter Rückfluß erhitzt. Die ausgefallene Maleaminsäure wurde abfiltriert und getrocknet. Die Maleaminsäure wurde zusammen mit 500 ml Essigsäureanhydrid und 35 g Natriumacetat (wasserfrei) in einen Dreihalskolben gegeben und 2 h bei 70 °C gerührt. Zur Isolierung des substituierten Maleimids goß man die Lösung langsam in kaltes Wasser, filtrierte das ausgefallene Produkt ab, wusch mit Wasser nach und trocknete im Trockenschrank. Zur Reinigung ließ sich das Rohprodukt aus Ethanol : Wasser (6:1) umkristallisieren.

### Beispiel 3

### Allgemeine Synthesevorschrift zur Herstellung von Monomeren

In einem Dreihalskolben mit Thermometer, Wasserabscheider, Tropftrichter und Rührer wurden 0.5 mol Maleinsäureanhydrid in 350 ml Xylol gelöst. Eine Lösung von 0.5 mol der jeweiligen Ausgangsverbindung mit einer primären Amingruppe in 300 ml Xylol wurde bei Raumtemperatur zugetropft. Nach beendeter Zugabe wurde noch 2 h bei 65 °C gerührt. Man gab 2 g Schwefelsäure hinzu und destillierte das Reaktionswasser mit Hilfe des Wasserabscheiders bei einer Temperatur von 135 - 140 °C während ca. 4 h ab. Anschließend werde das Xylol abdestilliert und die Reaktionsmischung in 750 ml kaltes Wasser gegeben. Das ausgefallene N-substituierte Maleimid wurde abfiltriert, mit Wasser nachgewaschen und getrocknet. Zur Reinigung ließ sich das Rohprodukt aus Ethanol : Wasser (6:1) umkristallisieren.

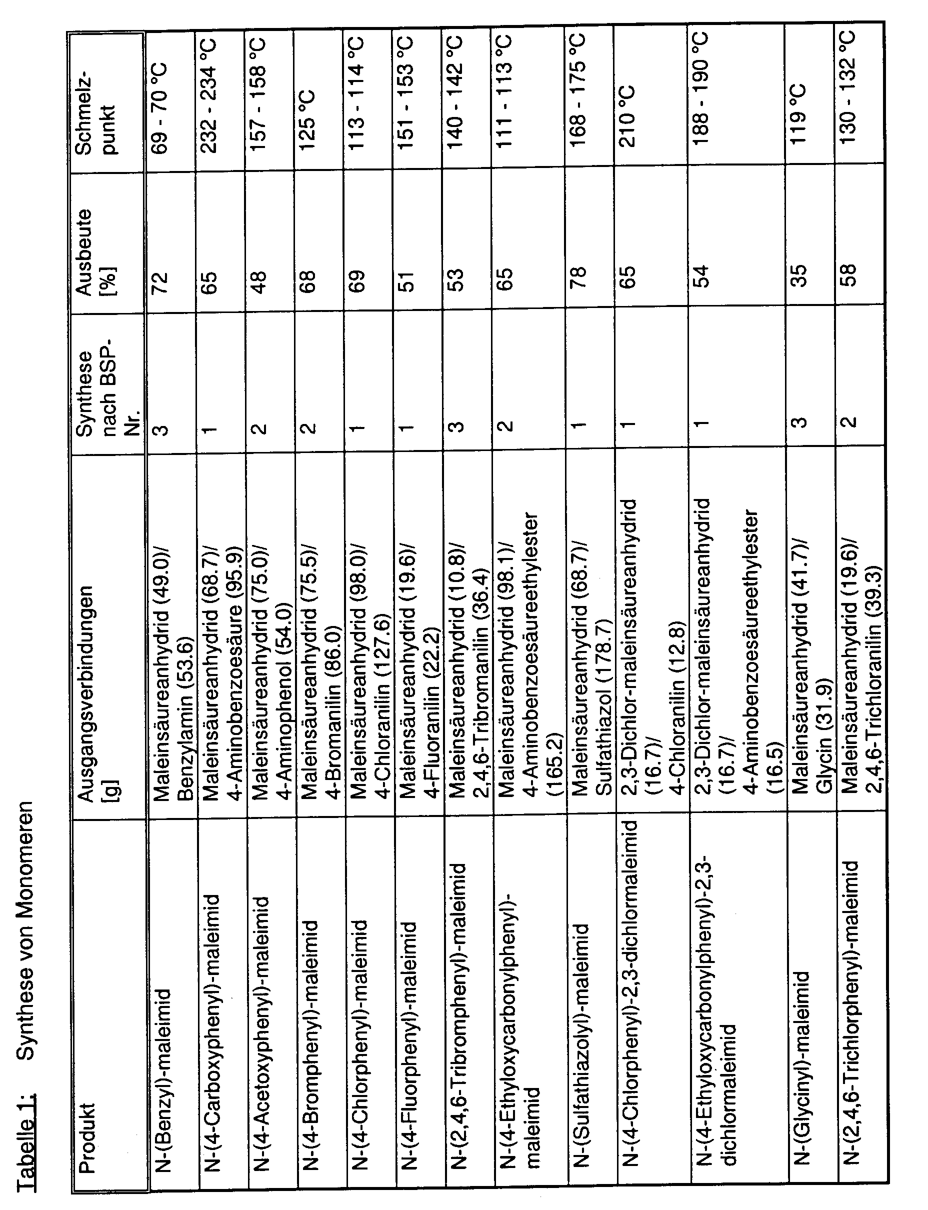

### Beispiel 4

### Allgemeine Vorschrift zur Copolymerisation der Monomeren

Die je nach gewünschter Copolymerzusammensetzung entsprechende Menge der Komponente A (N-substituiertes Maleimid), der Komponente B (zinnhaltiges Comonomer) und der Komponente C (Comonomer) wurden zusammen mit dem Lösungsmittel und dem Initiator in einen Dreihalskolben gegeben. Zur Entfernung von Sauerstoff rührte man die Lösung 30 min unter einem konstanten Stickstoffstrom. Anschließend wurde die Mischung auf 80 °C erwärmt und unter diesen Bedingungen 4 h lang copolymerisiert. Der Feststoffgehalt der Lösung wurde bestimmt. Durch Ausfällen in Methanol oder Petrolether und Isolierung in bekannter Weise (Filtration) ließ sich das Copolymere rein gewinnen.

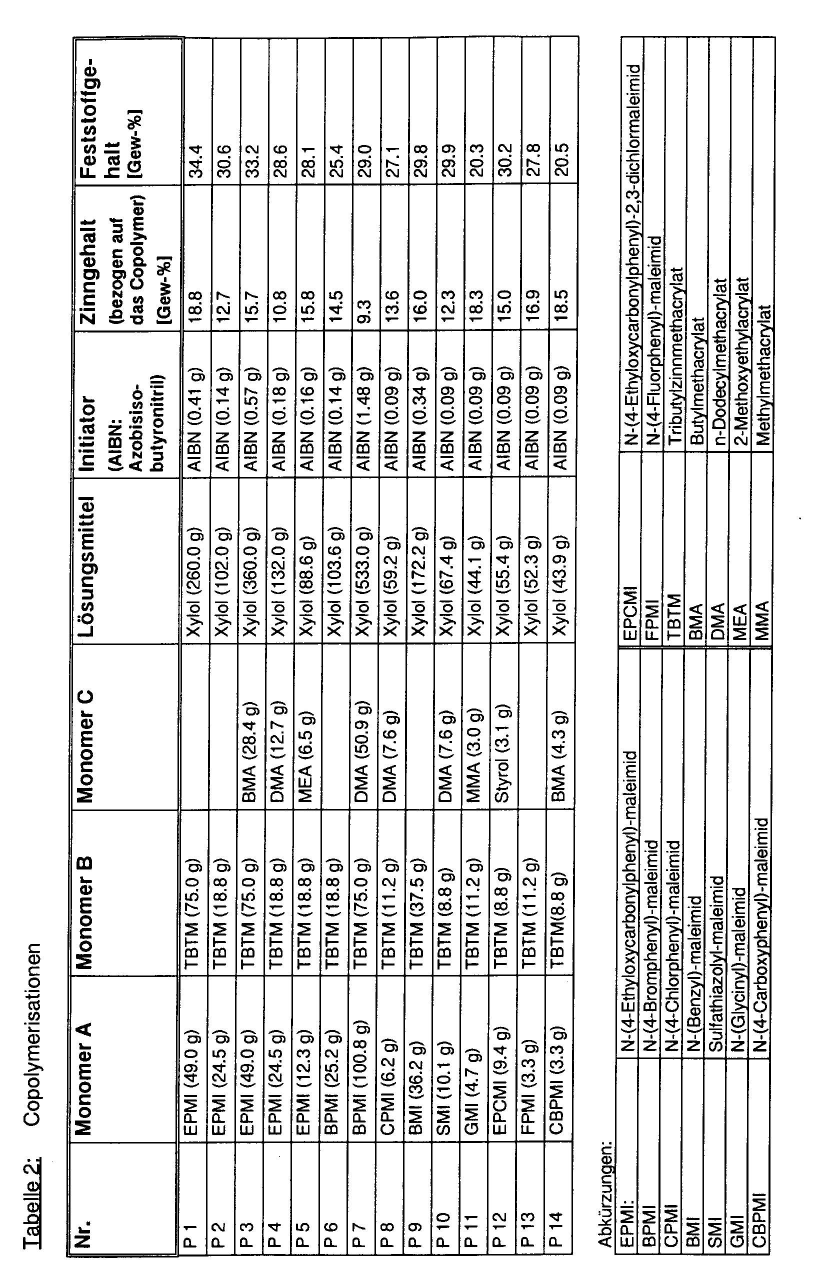

### Bestimmung der Hydrolyserate

Zur Bestimmung der Hydrolyseraten der erfindungsgemäßen Bindemittelsysteme in alkalischem Milieu wurden die Leitfähigkeits- bzw. pH-Wert-Änderungen in Abhängigkeit von der Zeit gemessen. Eine direkte Messung im Meerwasser (pH: 8.1 - 8.3) war aus meßtechnischen Gründen (hohe Eigenleitfähigkeit durch den Salzgehalt) nicht möglich.

Die Messungen wurden wie folgt durchgeführt:

300 ml bidestilliertes und entgastes Wasser wurden in einem Dreihalskolben - ausgerüstet mit einem Rührer, pH-Elektrode (Fa. WTW, Typ E50-1,5) und einer Leitfähigkeitselektrode (Fa. WTW, Typ LTA 1, Zellkonstante 0.996) - mittels Zugabe von NaOH-Plätzchen auf einen pH-Wert von 12 eingestellt. Das gesamte System wurde auf 25 0.1 °C thermostatisiert (Haake Thermostat GH-D8). Als Meßgeräte wurden ein pH-Meter (Fa. WTW, Typ pH 192) und ein Leitfähigkeitsmeßgerät (Fa. WTW, Typ LF 530) eingesetzt.

Die monomeren Verbindungen gemäß Tabelle 1 wurden in die wäßrige Lösung eingetragen; im Falle des Bindemittelsystems in Lösung gemäß Tabelle 2 wurde die Lösung zur Erzielung praxisrelevanter Schichtdickenverhältnisse auf Glasperlen mit einem Durchmesser von 3 mm aufgebracht und das Lösungsmittel mit Hilfe einer Vakuumpumpe entfernt. Die Einwaage des polymeren Bindemittelsystems wurde so gewählt, daß nach theoretisch vollständiger Hydrolyse noch ein ca. 50 %iger Natronlaugeüberschuß verblieb.

Zur Bestimmung der Hydrolyseraten wurden die beschichteten Glasperlen in die obengenannte Lösung gegeben. Die pH-Wert- und Leitfähigkeits-Änderungen wurden in Abhängigkeit von der Zeit direkt in der Lösung bestimmt, die zur besseren Durchmischung gerührt wurde. Die Meßdauer betrug 24 h.

Die Berechnung des Hydrolysegrades basierte auf der Änderung des pH-Wertes, der durch die Hydrolyse der entsprechenden funktionellen Gruppen abgesenkt wurde (Bildung von Carboxylgruppen). Durch Messung des pH-Wertes nach 24h (Start-pH: 12.00) und Berechnung der Anzahl der funktionellen Gruppen (basierend auf der Einwaage) ließ sich die Hydrolyserate ermitteln (%, basierend auf der Anzahl hydrolysierbarer funktioneller Gruppen).

Die folgende Tabelle 3 zeigt deutlich, daß die erfindungsgemäßen polymeren Bindemittelsysteme unter den gewählten Bedingungen in alkalischem Milieu hydrolysierten. (Anmerkung: Alle erfindungsgemäßen Monomeren der Tabelle 1 besitzen Hydrolyseraten > 95 %.)

**Tabelle 3**

| Hydrolyse von polymeren Bindemittelsystemen | |
|---|---|
| Bindemittelsystem | prozentualer Anteil der potentiell hydrolysierbaren Gruppen, die innerhalb von 24 h hydrolysiert werden |
| P 1 | 27.6 % |
| P 2 | 26.3 % |
| P 3 | 28.0 % |
| P 4 | 25.1 % |
| P 5 | 30.8 % |
| P 6 | 24.9 % |
| P 7 | 22.9 % |
| P 8 | 26.8 % |
| P 9 | 27.0 % |
| P 10 | 21.3 % |
| P 11 | 31.1 % |
| P 12 | 21.5 % |
| P 13 | 27.1 % |
| P 14 | 36.1 % |

| Vergleichsbeispiele: | |
|---|---|
| Poly(methylmethacrylat) | 3.0 % |
| Poly-[tributylzinnmethacrylatstat-methylmethacrylat] {1:2, mol:mol} | 30.9 % |

Die Wirksamkeit der erfindungsgemäßen Bindemittelsysteme gegenüber Meeresorganismen wurde durch Auslagerungsversuche in der Nordsee (Cuxhaven) ermittelt.

Zu diesem Zweck wurden Testplatten aus Polyvinylchlorid (10 x 15 x 0.4 cm) mit Antifoulinganstrichen, die gemäß Beispiel 5 hergestellt wurden, versehen.

### Beispiel 5

### Allgemeine Vorschrift zur Herstellung von Antifouling-Anstrichmitteln

75 g des jeweiligen Copolymeren (z.B. P 1 - P 14) als 40 - 50 %ige Lösung, 5 g Kupfer(I)oxid, 13 g Zinkoxid, 11.1 g Bentone 38 (Geliermittel auf Basis Montmorillonit-Erde, Titangesellschaft, 6 %ige Lösung in Xylol) und 10 g Xylol wurden 1 h intensiv vermahlen. Auf diese Weise wurden die Antifoulinganstriche 1 bis 14 erhalten (Tabelle 4).

Nach einer Entfettung mit Lösungsmitteln (z. B. Aceton) wurden die PVC-Platten zweimal mit der Antifoulingfarbe gestrichen und 48 h bei Raumtemperatur getrocknet. Die Trockenfilmdicke lag bei 80 - 120 µm. Die beschichteten PVC-Platten wurden anschließend in einen Kunststoffrahmen eingespannt und über einen Zeitraum von 12 mon ca. 0.5 - 1.5 m permanent unter der Wasseroberfläche ausgelagert. Als Vergleichsdaten dienten unbehandelte PVC-Platten, ein Testanstrich aus Poly-[tributylzinnmethacrylat-stat-methylmethacrylat] {1:2, mol:mol; kommerziell verwendetes Bindemittel, Zinngehalt des Copolymeren: 20.6 Gew.-%}, ein Testanstrich aus Poly-[tributylzinnmethacrylat-stat-methylmethacrylat] {1:3, mol:mol; reduzierter Zinngehalt des Copolymeren: 17.6 Gew.-%} sowie ein zinnfreier Testanstrich aus Polymethylmethacrylat als nicht funktionalisierte Polymerkomponente, die gemäß Beispiel 5 hergestellt wurden.

Die nachfolgende Tabelle 4 zeigt deutlich, daß die erfindungsgemäßen Bindemittel mit reduziertem Zinngehalt und N-substituierten Maleimiden während des Beobachtungszeitraums eine biozide Wirkung gegenüber tierischem und pflanzlichem Bewuchs aufwiesen. Der Testanstrich Poly-[tributylzinnmethacrylat-stat-methylmethacrylat] {1:3, mol:mol} mit seinem reduzierten Zinngehalt ohne die

erfindungsgemäßen N-substituierten Maleimide wies demgegenüber eine deutlich schlechtere Antifouling-Wirksamkeit auf. Die zinnfreien Testplatten ohne die erfindungsgemäßen Verbindungen zeigten einen nahezu vollständigen Bewuchs durch Algen, Balaniden und Muscheln.

**Tabelle 4**

| Seewasser-Auslagerungen von Testplatten in Cuxhaven | | | |
|---|---|---|---|
| **Anstrich** | **3 Monate** | **6 Monate** | **12 Monate** |
| Antifoulinganstrich 1 | 0 | 0 | 0 |
| Antifoulinganstrich 2 | 0 | 0 | 0 |
| Antifoulinganstrich 3 | 0 | 0 | 0 |
| Antifoulinganstrich 4 | 0 | 0 | 0 |
| Antifoulinganstrich 5 | 0 | 0 | 0 |
| Antifoulinganstrich 6 | 0 | 0 | 0 |
| Antifoulinganstrich 7 | 0 | 0 | 10 |
| Antifoulinganstrich 8 | 0 | 0 | 0 |
| Antifoulinganstrich 9 | 0 | 0 | 0 |
| Antifoulinganstrich 10 | 0 | 0 | 10 |
| Antifoulinganstrich 11 | 0 | 0 | 0 |
| Antifoulinganstrich 12 | 0 | 0 | 5 |
| Antifoulinganstrich 13 | 0 | 0 | 0 |
| Antifoulinganstrich 14 | 0 | 0 | 0 |
| | | | |

| Vergleichsbeispiele: | | | |
|---|---|---|---|
| unbehandelte PVC-Platte | 30 | 80 | 100 |
| PMMA-Anstrich | 20 | 80 | 100 |
| Poly-[tributylzinnmethacrylat-stat-methylmethacrylat] {1:2, mol:mol} | 0 | 0 | 0 |
| Poly-[tributylzinnmethacrylat-stat-methylmethacrylat] {1:3, mol:mol} | 0 | 20 | 60 |
| Zahlenangaben: % der bewachsenen Fläche, bezogen auf die Gesamtfläche 0 = kein Bewuchs 100 = kompletter Bewuchs | | | |

## Patentansprüche

1. Bindemittel für Antifouling-Anstrichmittel, herstellbar durch Copolymerisation von polymerisierbaren Monomeren, dadurch gekennzeichnet, daß als polymerisierbare Monomere Mischungen aus
A) mindestens eine der Verbindungen der allgemeinen Formel I 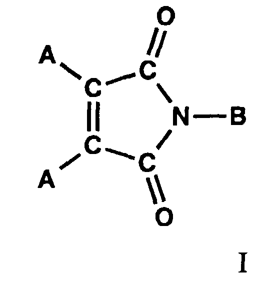 worin bedeuten:
A = H, Cl, Br, F
B = Ph(R¹)ₙ oder Benzyl oder -CH₂-COOR²
Ph = Phenyl
R¹ = gleich oder verschieden -NR²₂, -NH-CO-R², -NH-COOR², -CH₂-COOR², -COOR², -C(O)H, -O-R², -O-CO-R², -SO₃H, Halogen, gegebenenfalls substituierte Thiazolylsulfamylverbindungen der Formel 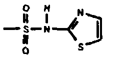 oder gegebenenfalls substituierte Thiadiazolylverbindungen
n = 1 - 3
R² = H, gegebenenfalls substituierte Alkyl-, Aryl-, Cycloalkyl-, Aralkyl-Reste mit 1 - 10 C-Atomen
und
B) mindestens eine ethylenisch ungesättigte Verbindung mit der allgemeinen Formel II 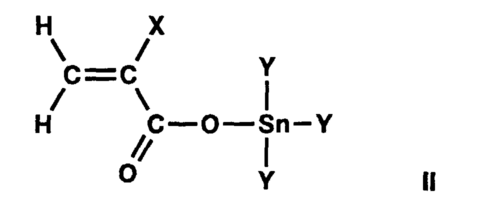 worin bedeuten:
X = H, CH₃
Y = C₄ - C₁₂ Alkyl, Phenyl, Cyclohexyl,
worin das molare Verhältnis von A : B zwischen 1 : 1 bis 5 : 1 liegt, und
C) mindestens eine ethylenisch ungesättigte Verbindung, worin das molare Verhältnis von (A + B) : C zwischen 1 : 0 bis 1 : 10 liegt,
in Gegenwart von radikalbildenden Initiatoren und inerten Lösungsmitteln in an sich bekannter Weise polymerisiert werden.

2. Bindemittel gemäß Anspruch 1, dadurch gekennzeichnet, daß das Verhältnis von A : B zwischen 1,5 : 1 bis 3 : 1 und das Verhältnis von (A + B) : C zwischen 1 : 0 und 1 : 5 liegt.

3. Bindemittel gemäß den Ansprüchen 1 und 2, dadurch gekennzeichnet, daß als Komponente
A) N-(4-Chlorphenyl)-maleimid, N-(4-Bromphenyl)-maleimid, N-(4-Fluorphenyl)-maleimid, N-(2,4,6-Trichlorphenyl)-maleimid, N-(2,4,6-Tribromphenyl)-maleimid, N-(4-Hydroxyphenyl)-maleimid, N-(4-Carboxyphenyl)-maleimid, N-(4-Acetoxyphenyl)-maleimid, N-(4-Ethyloxycarbonylphenyl)-maleimid, N-(Sulfathiazolyl)-maleimid, N-(Benzyl)-maleimid, N-(Glycinyl)-maleimid, N-(4-Chlorphenyl)-2,3-dichlormaleimid, N-(4-Ethyloxycarbonylphenyl)-2,3-dichlormaleimid, N-[4-(N',N'Dimethylamino)phenyl]-maleimid
und als Komponente
B) Tributylzinnmethacrylat
und gegebenenfalls als Komponente
C) Methacrylsäure, Butylacrylat, Methylmethacrylat, Butylmethacrylat, n-Hexylmethacrylat, n-Dodecylmethacrylat, 2-Hydroxyethylmethacrylat, 2-Methoxyethylacrylat, 3-Methacryloyloxypropyl-trimethoxysilan allein oder in Mischung
eingesetzt werden.

4. Antifouling-Anstrichmittel bestehend aus Bindemitteln, herstellbar durch Copolymerisation gemäß den Ansprüchen 1 bis 3, sowie gegebenenfalls Hilfs- und Zusatzstoffen, Pigmenten, Antiabsetzmittel, Lösungsmittel, Bioziden, Stabilisatoren.
